(19) Europäisches Patentamt

European Patent Office

Office européen des brevets

(11) Numéro de publication: **0 376 804**
**A1**

(12) **DEMANDE DE BREVET EUROPEEN**

(21) Numéro de dépôt: 89403563.3

(22) Date de dépôt: **19.12.89**

(51) Int. Cl.⁵: **F22B 37/22, F16L 55/132**

(30) Priorité: **29.12.88 FR 8817437**

(43) Date de publication de la demande:
**04.07.90 Bulletin 90/27**

(84) Etats contractants désignés:
**BE CH DE GB LI SE**

(71) Demandeur: **FRAMATOME**
**Tour Fiat 1, Place de la Coupole**
**F-92400 Courbevoie(FR)**

(72) Inventeur: **Cacciuttolo, Antoine**
**3, Impasse Copernic**
**F-69800 Saint-Priest(FR)**
Inventeur: **Malaval, Claude**
**115 bis Avenue du Bois de Verrières**
**F-92160 Antony(FR)**

(74) Mandataire: **Bouget, Lucien et al**
**Cabinet Lavoix 2, Place d'Estienne d'Orves**
**F-75441 Paris Cédex 09(FR)**

(54) **Dispositif d'obturation autoclave d'une portion d'une canalisation primaire d'un réacteur nucléaire à eau sous pression.**

(57) Le dispositif d'obturation autoclave comporte une enveloppe souple tubulaire (22) comportant une extrémité ouverte suivant le périmètre de laquelle l'enveloppe constitue un joint torique (30) gonflable et un fond (22a) en forme de doigt de gant sur lequel est fixée l'extrémité d'un axe (21) disposé à la partie centrale de l'enveloppe (22). L'axe (21) traverse le fond (22a) de l'enveloppe (22) de manière étanche. Le dispositif comporte également une plaque de maintien (38) de l'enveloppe (22) comportant au moins deux parties articulées entre elles ainsi que des moyens (41) de fixation de la plaque de maintien (38) sous le fond (22a). Des éléments (43) en forme de portions de couronne sont maintenus contre le joint torique (30) grâce à un dispositif articulé d'écartement (47).

FIG.2B    FIG.2A

# Dispositif d'obturation autoclave d'une portion d'une canalisation primaire d'un réacteur nucléaire à eau sous pression

L'invention concerne un dispositif d'obturation autoclave d'une portion d'une canalisation primaire d'un réacteur nucléaire à eau sous pression située au voisinage d'une tubulure de raccordement à la boîte à eau d'un générateur de vapeur.

Afin de prolonger la durée de vie des réacteurs nucléaires à eau sous pression, on envisage de réaliser le changement complet d'un ou plusieurs générateurs de vapeur du réacteur, après un certain temps de fonctionnement, dans le cas où un certain nombre de tubes du générateur de vapeur ont subi des dégradations dues à la corrosion, aux chocs de particules transportées par le fluide primaire ou aux contraintes thermiques ou mécaniques subies par ces tubes en service.

L'opération de changement complet d'un générateur de vapeur dont la boîte à eau comporte des tubulures permettant de relier la partie primaire du générateur de vapeur à des canalisations primaires correspondantes du réacteur nucléaire nécessite de réaliser le découpage des canalisations primaires au voisinage de leur point de raccordement avec les tubulures, puis la mise en place précise du générateur de vapeur neuf et le soudage des tubulures de ce générateur de vapeur neuf aux portions de canalisation primaire découpées et préusinées.

Pour effectuer les opérations de découpage et de préusinage des portions de raccordement des canalisations primaires ainsi que les opérations de soudage ultérieures, il est nécessaire de décontaminer la boîte à eau du générateur de vapeur usagée et une portion des canalisations primaires situées au voisinage de la tubulure de raccordement correspondante du générateur de vapeur.

Pour cela, on utilise une installation permettant de mettre en circulation dans la boîte à eau et dans chacune des portions de canalisations primaires voisines des tubulures de raccordement, un réactif de décontamination sous forme liquide qui est recyclé après décontamination dans des unités de traitement disposées au voisinage de la casemate du générateur de vapeur.

Pour effectuer cette décontamination par circulation de liquide, il est nécessaire d'isoler la portion de chacune des canalisations primaires située au voisinage de la tubulure de raccordement au générateur de vapeur, grâce à un dispositif d'obturation qui peut être mis en place, depuis l'intérieur de la boîte à eau du générateur de vapeur, avant de réaliser l'opération de décontamination.

Dans le brevet français 2.602.853, on décrit un obturateur qui peut être placé à l'intérieur d'une canalisation et qui est constitué par un ballon gonflable.

Un tel dispositif présente cependant des inconvénients dans le cas d'une application dans le cadre de la décontamination de la boîte à eau d'un générateur de vapeur.

En effet, il est difficile de réaliser un ballon dont l'enveloppe souple puisse résister aux conditions de pression et de température mises en oeuvre pendant la décontamination ainsi qu'à l'action corrosive du liquide de décontamination. L'introduction du ballon dans la canalisation, alors que ce ballon n'est pas soumis à une pression interne, peut présenter des difficultés dans la mesure où le ballon est susceptible de subir une déformation se traduisant par un blocage dans une partie courbe de la canalisation.

En outre, dans le cas où le ballon a été correctement introduit, mis en place et gonflé à l'intérieur de la canalisation, il est susceptible de subir, pendant la décontamination, une déformation sous l'effet de la pression du liquide qui peut se traduire par une perte d'étanchéité et par l'introduction de liquide de décontamination dans le circuit primaire du réacteur.

On a également proposé, dans la demande de brevet EP-A-163.087, une tape d'obturation présentant des éléments d'étanchéité gonflables et une structure de maintien en appui sur la surface intérieure de la tubulure du générateur de vapeur. Le but de l'obturateur décrit dans cette demande de brevet est d'isoler la boîte à eau du reste du circuit primaire qui reste rempli d'eau. Dans le cas de la décontamination de la boîte à eau et d'une portion des canalisations primaires, le circuit primaire est vide d'eau et la boîte à eau du générateur de vapeur est alimentée en liquide de décontamination sous pression ; en conséquence, le dispositif suivant la demande de brevet EP-A-163.087 n'est pas adapté au cas de la décontamination.

Le but de l'invention est donc de proposer un dispositif d'obturation autoclave d'une portion d'une canalisation primaire d'un réacteur nucléaire à eau sous pression située au voisinage d'une tubulure de raccordement à la boîte à eau d'un générateur de vapeur, comportant un moyen de retenue en appui sur la surface intérieure de la tubulure et un élément souple déformable assurant la fermeture étanche de la canalisation, par mise en contact de l'enveloppe avec la paroi interne de la canalisation, lors du remplissage de la boîte à eau par un fluide sous pression, ce dispositif pouvant être facilement mis en place depuis la boîte à eau du générateur de vapeur, à l'intérieur d'une canalisation du circuit primaire, de manière à assurer une fermeture étanche et efficace de cette canalisation, quelle que soit la pression du fluide introduit dans la boîte à eau.

Dans ce but, le dispositif suivant l'invention comporte :
- un axe comportant des moyens de liaison articulés et amovibles au moyen de retenue à l'une de ses extrémités,
- une enveloppe souple tubulaire comportant une extrémité ouverte suivant le périmètre de laquelle l'enveloppe constitue un joint torique gonflable et un fond en forme de doigt de gant sur lequel est fixée l'extrémité de l'axe opposée à son extrémité de liaison articulée, de manière que l'axe disposé à la partie centrale de l'enveloppe traverse le fond de manière étanche,
- une plaque de maintien de l'enveloppe comportant au moins deux parties assemblées entre elles,
- les moyens de fixation de la plaque de maintien sous le fond et à l'extérieur de l'enveloppe comportant un élément de liaison amovible à l'extrémité de l'axe traversant l'enveloppe et un élément de support de la plaque de maintien,
- au moins deux éléments en forme de portion de couronne ayant une partie périphérique externe dans laquelle le bord supérieur de l'enveloppe peut venir se loger,
- et un dispositif articulé d'écartement radial et de maintien des portions de couronne contre le bord de l'enveloppe comportant un corps central traversé par une ouverture dont le diamètre est supérieur au diamètre de l'axe.

Afin de bien faire comprendre l'invention, on va maintenant décrire à titre d'exemple non limitatif, en se référant aux figures jointes en annexe, le cadre général d'utilisation du dispositif d'obturation suivant l'invention et un mode de réalisation de ce dispositif d'obturation.

La figure 1 est une vue en perspective éclatée de la partie inférieure d'un générateur de vapeur et d'une portion de canalisation primaire, pendant une opération de décontamination, l'oburation de la canalisation primaire étant assurée par un dispositif suivant l'art antérieur.

Les figures 2A et 2B sont des demi-vues en coupe par un plan axial du dispositif suivant l'invention.

La figure 3 est une vue en perspective de la plaque de maintien dans une position partiellement repliée.

La figure 4 est une vue en coupe axiale du dispositif d'obturation suivant l'invention dans une portion d'une canalisation primaire d'un réacteur nucléaire à eau sous pression.

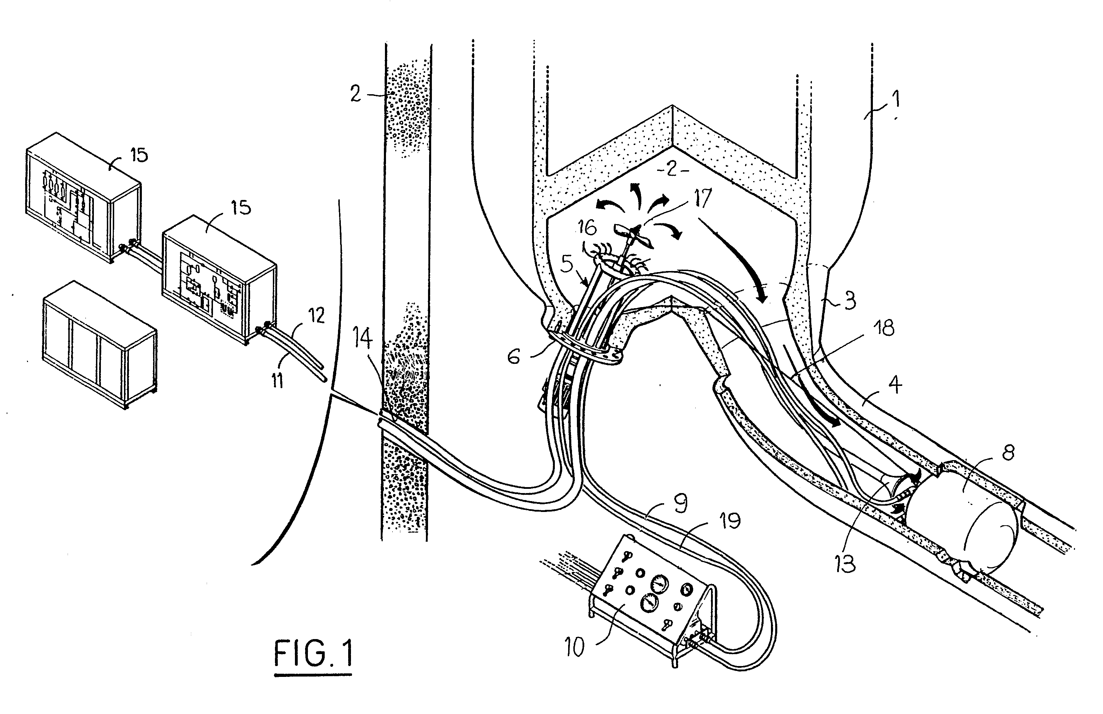

Sur la figure 1, on voit le fond d'un générateur de vapeur 1 disposé à l'intérieur d'une casemate de protection dont on a représenté une partie de la paroi 2. La partie inférieure du générateur de vapeur 1 est constituée par une boîte à eau 2 de forme sensiblement hémisphérique comportant au moins deux tubulures telles que 3 permettant le raccordement de la partie primaire du générateur de vapeur à une canalisation 4 du circuit primaire.

La boîte à eau 2 comporte également une ouverture de visite 5 dont le diamètre est sensiblement inférieur au diamètre intérieur de la canalisation primaire 4.

Pendant le fonctionnement normal du réacteur nucléaire, l'ouverture de visite 5 est fermée de manière étanche par une tape.

Sur la figure 1, la partie inférieure du générateur de vapeur 1 et la canalisation primaire 4 ont été représentées pendant une opération de décontamination nécessaire pour effectuer le changement du générateur de vapeur usagé 1.

La tape de l'ouverture de visite 5 est démontée et un dispositif 6 de fermeture provisoire et de maintien de l'outillage de décontamination est fixé sur la partie d'entrée externe de l'ouverture de visite 5.

Un dispositif d'obturation suivant l'art antérieur constitué par un ballon gonflable 8 a été introduit à l'état non gonflé dans la canalisation 4 puis mis en pression grâce à une canalisation d'air comprimé 9 reliée à un poste de service 10 situé dans la casemate du générateur de vapeur.

La canalisation 9 traverse de manière étanche le dispositif de fermeture et de maintien 6 pour être reliée à son extrémité à une valve de gonflage du ballon 8.

Le dispositif de fermeture et de maintien 6 est également traversé de manière étanche, par une canalisation 11 d'alimentation en liquide réactif de décontamination de la boîte à eau 2 et par une canalisation 12 de récupération du liquide contaminé ayant circulé dans la boîte à eau 2 et dans la portion de la canalisation 4 délimitée par l'obturateur 8.

La canalisation de récupération 12 est reliée à une trompe de récupération 13 dont l'extrémité ouverte se trouve au voisinage de l'obturateur 8.

Les canalisations 11 et 12 traversent la paroi 2 de la casemate au niveau d'une ouverture 14 et sont reliées, à l'extérieur de la casemate, à des unités 15 de décontamination permettant le recyclage du liquide réactif.

La conduite souple d'alimentation 11 est reliée, à son extrémité pénétrant dans la boîte à eau 2, à un tore 16 d'introduction du liquide réactif de décontamination. Un agitateur à hélice 17 comporte un axe situé suivant l'axe du tore relié à l'extérieur de la boîte à eau à un moteur d'entraînement.

Un câble de retenue 18 de l'obturateur 8 est relié à l'obturateur 8 à l'une de ses extrémités et au dispositif de support et de fermeture 6 à son autre extrémité.

Le dispositif 6 est également traversé de manière étanche par une conduite 19 alimentée en eau de rinçage à partir du poste de service 10.

Dans le cas où le dispositif d'obturation 8 est constitué par un ballon gonflable, il apparaît qu'il peut être malaisé, dans certaines circonstances, d'introduire ce ballon gonflable dans la canalisation 4, depuis la boîte à eau 2, dans la mesure où la canalisation 4 présente une certaine courbure dans sa partie voisine de la tubulure de raccordement 3 ; l'obturateur 8 peut se déformer de manière à se trouver bloqué avant de parvenir dans sa position de service où l'enveloppe est mise sous pression et réalise l'étanchéité par contact avec la paroi intérieure de la canalisation 4.

De plus, le dispositif d'obturation 8 est soumis, sur sa face dirigée vers la boîte à eau 2, à la pression du liquide actif de décontamination qui risque de rendre le contact entre le dispositif d'obturation 8 et la surface intérieure de la canalisation 4 défectueux, si bien que l'étanchéité n'est plus assurée et que du liquide de décontamination risque de se répandre dans le circuit primaire du réacteur nucléaire.

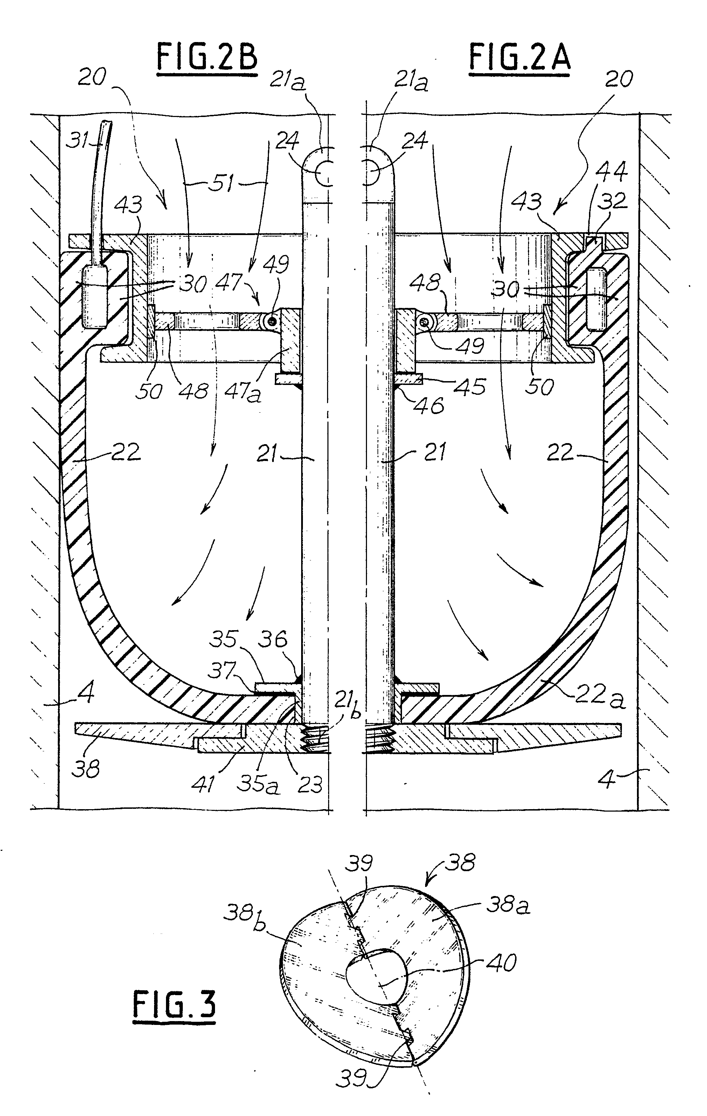

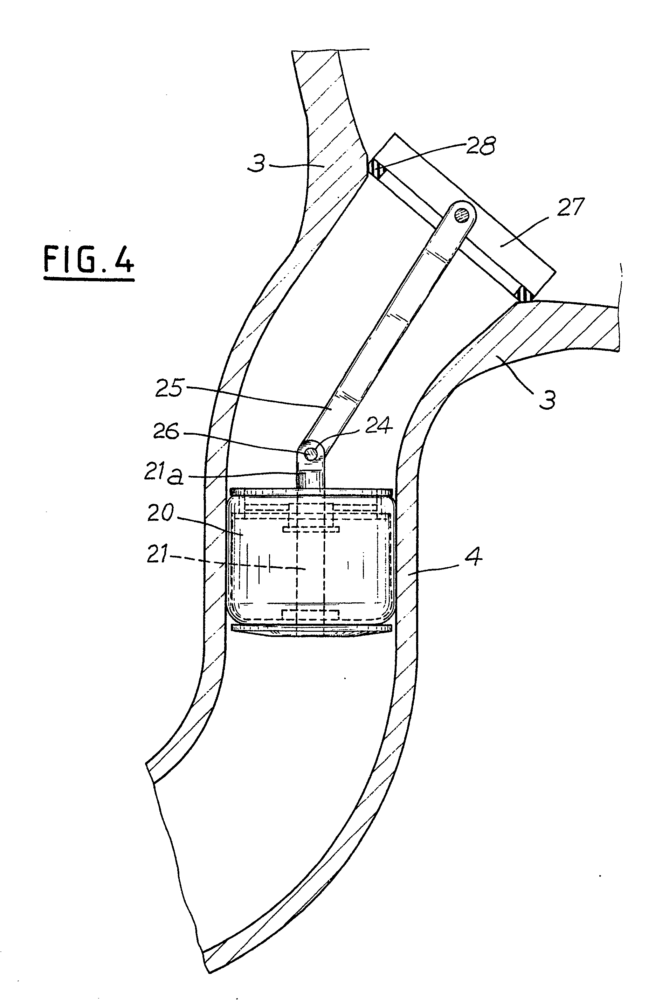

Sur les figures 2A et 2B ainsi que sur la figure 4, on a représenté un dispositif d'obturation suivant l'invention qui permet d'éviter les inconvénients du dispositif selon l'art antérieur constitué par un ballon gonflable.

Sur la figure 2A, le dispositif a été représenté après sa mise en place dans la canalisation 4 et avant qu'un contact totalement étanche ne soit réalisé entre la surface extérieure de l'enveloppe souple du dispositif et la paroi intérieure de la canalisation 4.

Sur la figure 2B, le dispositif a été représenté dans une configuration où il assure l'étanchéité par contact entre la paroi externe de l'enveloppe souple et la paroi interne de la canalisation 4.

Le dispositif d'obturation suivant l'invention désigné de manière générale par le repère 20 comporte principalement un axe central 21 et une enveloppe souple 22.

L'axe central 21 est constitué par une tige cylindrique dont une extrémité 21a est usinée pour présenter des méplats et pour constituer une chape percée d'un trou 24.

Comme il est visible sur la figure 4, l'extrémité 21a de la tige 21 peut être reliée de manière articulée à une tige 25, par l'intermédiaire d'un axe d'articulation 26 engagé dans le trou 24 et dans un trou correspondant de la tige 25, l'axe d'articulation 26 étant perpendiculaire à l'axe de la canalisation 4 lorsque le dispositif est en position de service.

L'axe 25 est articulé à son extrémité opposée à la chape de liaison 21a de l'axe 21 à une tape 27 en appui sur la surface intérieure de la tubulure 3 du générateur de vapeur, par l'intermédiaire d'un anneau d'appui 28.

Comme il est visible sur la figure 4, le dispositif d'appui 27, 28 sur la tubulure 3 et la tige 25 assurent la retenue du dispositif d'obturation 20 à l'intérieur de la canalisation 4, dans sa position de service.

L'axe 21 comporte, à son extrémité opposée à la chape d'articulation 21a, une partie filetée 21b.

L'enveloppe 22 qui est constituée par un élastomère résistant au liquide actif de décontamination présente une forme générale tubulaire et comporte un fond 22a en forme de doigt de gant percé à sa partie centrale d'une ouverture 23.

L'extrémité de l'enveloppe 22 opposée au fond 22a est ouverte et comporte, à sa périphérie, une partie torique creuse 30 venue de moulage avec l'enveloppe 22 et constituant un joint gonflable.

Le volume intérieur de la partie torique 30 peut être alimenté en air comprimé par une conduite 31 assurant le gonflement du joint pour le faire passer de sa configuration représentée sur la figure 2A à sa configuration représentée sur la figure 2B.

La partie torique supérieure 30 de l'enveloppe 22 comporte également un ou plusieurs tenons 32 venus de moulage avec l'enveloppe 2 et en saillie par rapport à la partie supérieure de l'enveloppe.

Une pièce annulaire 35 de fixation étanche de l'axe 21 sur l'enveloppe 22 est fixée par une soudure 36 sur une partie de l'axe 21 située immédiatement au-dessus de la partie filetée 21b.

La pièce annulaire 35 comporte une collerette 35a engagée dans le trou 23 de l'enveloppe et sa surface annulaire inférieure est collée sur le fond de l'enveloppe 22 par une couche de colle 37. L'extrémité filetée 21b de l'axe 21 se trouve légèrement saillante vers l'extérieur par rapport au fond 22a de l'enveloppe 22 lorsque l'extrémité de l'axe 21 est fixée sur l'enveloppe 22, par l'intermédiaire de la pièce 35.

Le dispositif d'obturation selon l'invention comporte de plus une plaque de maintien 38 de l'enveloppe 22 du dispositif d'obturation.

Comme il est visible sur la figure 3, la plaque 38 en forme de couronne est constituée par deux demi-couronnes 38a et 38b reliées entre elles de manière articulée par des charnières 39, de manière que l'axe d'articulation 40 des deux demi-couronnes 38a et 38b se trouve dans le plan des demi-couronnes et dirigé suivant un diamètre. Les charnières 39 permettent de replier complètement la plaque 38, les demi-couronnes 38a et 38b venant en appui l'une sur l'autre.

Une pièce de support 41 engagée dans l'ouverture centrale de la couronne 38 et comportant un épaulement d'appui permet de maintenir la plaque 38 dans sa position déployée comme représenté sur la figure 2A, les demi-couronnes 38a et 38b étant alors dans un même plan. La pièce de support 41 comporte un alésage central taraudé qui peut être engagé par vissage sur l'extrémité filetée 21b de l'axe 21 pour assurer le maintien de la plaque 38. La pièce support 41 peut être, dans le cas où l'on veut alléger le poids global du dispositif, constituée d'un plateau à bras rayonnant.

Le dispositif d'obturation suivant l'invention comporte également deux éléments en forme de por tion de couronne 43 dont le profil méridien en forme de C est visible sur les figures 2A et 2B. Le joint torique 30 constitué par la partie supérieure de l'enveloppe 22 peut être logé au moins partiellement à l'intérieur de ce profil en forme de C.

L'une des couronnes comporte une ouverture de passage du tube d'alimentation du volume interne du joint torique 30 en air comprimé.

Une au moins des couronnes 43 comporte un évidement 44 permettant de recevoir la partie en saillie 32 du joint torique 30 pour réalise son maintien lors de la mise en place du dispositif d'obturation.

Une butée 45 de forme annulaire est fixée sur l'axe 21, dans une position définie grâce à un joint de soudure 46.

L'obturateur suivant l'invention comporte également un dispositif d'écartement articulé 47 comportant une virole centrale 47a dont le diamètre intérieur est supérieur au diamètre de. l'axe 21 et trois bras décartement 48 qui peuvent être placés à 120° autour de la virole 47a. Chacun des bras 48 est articulé à l'une de ses extrémités par un axe 49 sur la virole 47a et comporte un patin d'appui 50 à son autre extrémité. Les axes d'articulation 49 sont perpendiculaires à l'axe de la virole 47a.

On va maintenant décrire les opérations nécessaires pour la mise en place du dispositif suivant l'invention dans une canalisation primaire 4 d'un réacteur nucléaire et pour la réalisation de la fermeture étanche de la canalisation.

Dans un premier temps, les différentes parties constituant le dispositif d'obturation suivant l'invention sont introduites dans la boîte à eau 2 du générateur de vapeur par l'ouverture de visite.

L'ensemble constitué par l'axe 21 et l'enveloppe 22 peut être facilement introduit par l'ouverture de visite bien que le diamètre de l'enveloppe soit supérieur au diamètre de l'ouverture de visite, dans la mesure où l'enveloppe souple peut être facilement repliée.

Les autres pièces constituant le dispositif représenté sur les figures 2A et 2b peuvent également être introduites sans difficulté à l'intérieur de la boîte à eau par l'ouverture de visite, à l'exception de la plaque d'appui 38 qui doit être repliée suivant sa ligne de pliage 40, le diamètre extérieur de la plaque 38 étant supérieur au diamètre de l'ouverture de visite.

Un opérateur placé dans la boîte à eau du générateur de vapeur réalise le déploiement de la plaque 38 et son assemblage à l'extrémité de l'axe 21, par l'intermédiaire de la pièce de support taraudée 41.

L'ensemble constitué par l'axe 21, l'enveloppe 22 et la plaque d'appui 38 fixée à l'extrémité de l'axe 21 est introduit par l'ouverture de la tubulure 3 débouchant dans la boîte à eau. Pour faciliter l'introduction et le déplacement du dispositif d'obturation 20 à l'intérieur de la canalisation 4, l'axe 21 est relié à son extrémité articulée 21a à l'extrémité de la tige 25.

On réalise alors un prégonflage du joint torique 30 et de l'enveloppe 22, pour assurer son déploiement complet et son maintien provisoire dans la canalisation 4.

On peut alors démonter la tige 25 après avoir chassé l'axe 26 de l'ouverture 24.

On vient alors placer les deux éléments 43 en forme de demi-couronnes à la périphérie interne du joint torique 30 comme représenté sur les figures 2A et 2B. Le maintien des demi-couronnes 43 est assuré par les parties en saillie 32 de l'enveloppe 22 venant se loger dans des ouvertures 44 des demi-couronnes 43.

Le dispositif d'écartement 47 est mis en place, la virole centrale 47a étant enfilée sur l'axe 21 par son extrémité supérieure jusqu'au moment où la virole 47a vient reposer sur la butée 45.

Les doigts articulés 48 sont alors ramenés dans une position perpendiculaire à l'axe 21, leurs patins 50 venant en appui contre la surface intérieure des demi-couronnes 43 pour en assurer le maintien.

Le gonflage du joint torique 30 est effectué en envoyant de l'air comprimé dans la canalisation 31.

Le dispositif d'obturation est alors dans une position où il assure la fermeture étanche de la portion voulue de la canalisation 4 voisine de la tubulure 3.

On peut alors effectuer la décontamination par circulation d'un liquide actif sous pression, comme il a été décrit en se référant à la figure 1. Le fluide en circulation (flèche 51) vient exercer une pression à l'intérieur de l'enveloppe 22 et assure ainsi un placage de l'enveloppe 22 contre la surface intérieure de la canalisation 4 d'autant plus efficace que la pression du liquide est plus importante.

La plaque 38 assure le maintien du fond 22a de l'enveloppe 22 pour éviter une déformation excessive de cette enveloppe, à l'intérieur de la canalisation primaire.

Le dispositif d'obturation est donc un dispositif autoclave.

Il. en résulte que ce dispositif d'une mise en oeuvre simple présente une grande efficacité en fonctionnement et qu'en particulier son étanchéité est assurée quelle que soit la pression du liquide de décontamination.

Il est bien évident que l'invention ne se limite pas au mode de réalisation qui a été décrit.

C'est ainsi que l'enveloppe souple peut avoir une forme différente de celle qui a été décrite et représentée.

La plaque de maintien de cette enveloppe souple dont le diamètre est supérieur au diamètre de l'ouverture de visite peut être constituée d'un nombre quelconque de parties assemblables entre elles après introduction de ces parties constituantes dans la boîte à eau du générateur de vapeur.

Les moyens de fixation de la plaque de maintien sur le fond de l'enveloppe et de liaison à l'axe peuvent également être réalisés sous une forme différente.

La couronne dans laquelle vient se loger le joint torique supérieur de l'enveloppe peut être constituée par plus de deux éléments et le dispositif d'écartement peut comporter seulement deux bras articulés ou, au contraire, un nombre de bras articulés supérieurs à trois.

La liaison articulée entre l'axe et le moyen de retenue dans la tubulure du générateur de vapeur peut être réalisée par des moyens différents d'une chape dans laquelle est engagée un axe d'assemblage.

Enfin, le dispositif d'obturation suivant l'invention peut être adapté à tout diamètre de canalisation primaire et à toute condition en ce qui concerne la pression, la température et la composition chimique du liquide réactif de décontamination utilisé.

**Revendications**

1.- Dispositif d'obturation autoclave d'une portion d'une canalisation primaire (4) d'un réacteur nucléaire à eau sous pression située au voisinage d'une tubulure (3) de raccordement à la boîte à eau (2) d'un générateur de vapeur, comportant un moyen de retenue (25, 27, 28) en appui sur la surface intérieure de la tubulure (3) et un élément (22) souple déformable assurant la fermeture étanche de la canalisation (4) par mise en contact de l'élément souple (22) avec la paroi interne de la canalisation (4), lors du remplissage de la boîte à eau (2) par un fluide sous pression, caractérisé par le fait qu'il comporte :
- un axe (21 ) comportant des moyens (21a, 26) de liaison articulés et amovibles aux moyens de retenue (25, 27, 28) à l'une de ses extrémités,
- une enveloppe souple tubulaire (22) comportant une extrémité ouverte suivant le périmètre de laquelle l'enveloppe constitue un joint torique (30) gonflable et un fond (22a)en forme de doigt de gant sur lequel est fixée l'extrémité de l'axe (21) opposée à son extrémité de liaison articulée (21a), de manière que l'axe (21) disposé à la partie centrale de l'enveloppe (22) traverse le fond (22a) de manière étanche,
- une plaque de maintien (38) de l'enveloppe comportant au moins deux parties (38a, 38b) assemblées entre elles,
- des moyens de fixation (41) de la plaque de maintien (38) sous le fond (22a) et à l'extérieur de l'enveloppe (22) comportant un élément de liaison amovible à l'extrémité (21b) de l'axe (21) traversant l'enveloppe (22) et un élément de support de la plaque (38) de maintien,
- au moins deux éléments (43) en forme de portion de couronne ayant une partie périphérique externe dans laquelle le joint torique (30) de l'enveloppe (22) peut venir se loger,
- et un dispositif articulé (47) d'écartement radial et de maintien des portions de couronne (43) contre le joint torique (30) de l'enveloppe (22), comportant un corps central (47a) traversé par une ouverture dont le diamètre est supérieur au diamètre de l'axe (21).

2.- Dispositif d'obturation suivant la revendication 1, caractérisé par le fait que la plaque de maintien (38) de l'enveloppe (22) comporte deux parties (38a, 38b) en forme de demi-couronnes assemblées entre elles et articulées, par l'intermédiaire de charnières (39) constituant une ligne de pliage (40) de direction diamétrale.

3.- Dispositif d'obturation suivant l'une quelconque des revendications 1 et 2, caractérisé par le fait que l'extrémité de l'axe (21) traversant l'enveloppe (22) comporte une partie filetée (21b), le moyen de fixation (41) de la plaque de maintien (38) comportant une partie taraudée correspondante, pour son assemblage à la partie d'extrémité (21b) de l'axe (21).

4.- Dispositif d'obturation suivant l'une quelconque des revendications 1, 2 et 3, caractérisé par le fait que l'extrémité de l'axe (21) opposée à son extrémité (21a) de liaison articulée est fixée de manière étanche sur le fond (22a) de l'enveloppe (22), par l'intermédiaire d'une pièce annulaire (35) soudée sur l'axe (21) et collée sur le fond de l'enveloppe (22), autour d'un trou de passage (23) de l'axe (21) en position centrale dans le fond (22a) de l'enveloppe (22).

5.- Dispositif d'obturation suivant l'une quelconque des revendications 1 à 4, caractérisé par le fait qu'il comporte deux éléments (43) en forme de demi-couronnes ayant un profil méridien en forme de C ouvert vers l'extérieur.

6.- Dispositif d'obturation suivant l'une quelconque des revendications 1 à 5, caractérisé par le fait que le dispositif articulé d'écartement (47) comporte une virole centrale (47a) dont l'alésage intérieur présente un diamètre supérieur au diamètre de l'axe (21) et trois bras (48) de direction radiale disposés à 120° les uns des autres autour de la virole centrale (47a), articulés sur cette virole centrale par l'intermédiaire d'axes (49) perpendiculaires à l'axe de l'alésage de la virole et comportant à leur extrémité opposée à l'extrémité articulée sur la virole centrale (47a) chacun un patin d'appui (50) sur la surface intérieure des éléments en forme de portions de couronne (43).

7.- Dispositif d'obturation suivant la revendication 6, caractérisé par le fait que l'axe (21) comporte une butée d'appui (45) sur laquelle vient reposer le corps central (47a) du dispositif d'écartement radial (47) lors de sa mise en service.

8.- Procédé d'obturation autoclave d'une portion d'une canalisation primaire (4) d'un réacteur nucléaire à eau sous pression située au voisinage d'une tubulure (3) de raccordement de la boîte à eau (2) d'un générateur de vapeur, caractérisé par le fait :
- qu'on introduit dans la boîte à eau (2) du générateur de vapeur, par une ouverture de visite (8) une enveloppe souple tubulaire (22) comportant une extrémité ouverte suivant le périmètre de laquelle l'enve loppe (22) constitue un joint torique (30) gonflable et un fond (22a) en forme de doigt de gant sur lequel est fixée l'extrémité d'un axe (21) disposé à la partie centrale de l'enveloppe (22), de manière que l'axe (21) traverse le fond (22a) de manière étanche, une plaque de maintien (38) de l'enveloppe (22) en plusieurs parties assemblées entre elles, un moyen de fixation (41) de la plaque de maintien (38) sous le fond (22a) de l'enveloppe (22) comportant un élément de liaison amovible à l'extrémité de l'axe (21) traversant l'enveloppe (22), au moins deux éléments (43) en forme de portion de couronne ayant une partie périphérique externe dans laquelle le joint torique (30) peut venir se loger et un dispositif articulé (47) d'écartement radial et de maintien des portions de couronne (43) comportant un corps central (47a) traversé par une ouverture dont le diamètre est supérieur au diamètre de l'axe (21),
- qu'on assemble et qu'on déploie les parties constitutives (38a, 38b) de la plaque (38) à l'intérieur de la boîte à eau et qu'on assemble la plaque (38) par l'intermédiaire du moyen de fixation (41) à l' extrémité de l'axe (21) saillante par rapport au fond (22a) de l'enveloppe (22),
- qu'on introduit, depuis l'intérieur de la boîte à eau (2), l'enveloppe souple (22) assemblée à l'axe (21) et à la plaque de maintien (38), à l'intérieur d'une canalisation primaire (4), la plaque (38) et le fond (22a) étant introduits en premier dans la canalisation, jusqu'au moment où l'enveloppe (22) occupe la position de service du dispositif d'obturation (20) dans la canalisation (4),

- qu'on réalise un prégonflage du joint torique (30) et de l'enveloppe (22) en insufflant un gaz sous pression,
- qu'on met en place les éléments (43) en forme de portions de couronne sur le joint torique (30),
- qu'on enfile le corps central (47a) du dispositif d'écartement (47) sur l'axe (21) jusqu'au moment où les moyens d'écartement (48) de ce dispositif (47) se trouvent dans une position située en vis-à-vis des éléments (43) en forme de portions de couronne,
- qu'on met en place par extension radiale les dispositifs d'écartement (48) de manière qu'ils viennent en appui sur les éléments en forme de portions de couronne (43) pour les maintenir contre le joint torique (30),
- qu'on réalise le gonflage du joint torique (30) à la pression voulue,
- et qu'on relie l'extrémité (21a) de l'axe (21) opposée à l'extrémité de cet axe (21) reliée au fond (22a), à un dispositif de retenue (25, 27, 28) qui est mis en appui contre la surface intérieure d'une tubulure (3) du générateur de vapeur.

FIG.1

FIG.2B     FIG.2A

FIG.3

# FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 175 221 (WESTINGHOUSE ELECTRIC CORP.) * Résumé; figures * | 1,8 | F 22 B 37/22 F 16 L 55/132 |
| A,D | EP-A-0 163 087 (WESTINGHOUSE ELECTRIC CORP.) * Résumé; figures * | 1,8 | |
| A | FR-A-2 573 237 (MITSUBISHI JUKOGYO K.K.) * Résumé; figures * | 1,8 | |
| A | EP-A-0 170 789 (COMBUSTION ENGINEERING INC.) * Résumé; figures * | 1,2,8 | |

**DOMAINES TECHNIQUES RECHERCHES (Int. Cl.5)**

F 22 B
F 16 L
G 21 C

Le présent rapport a été établi pour toutes les revendications

| Lieu de la recherche | Date d'achèvement de la recherche | Examinateur |
|---|---|---|
| LA HAYE | 04-04-1990 | BARTSCH A.W. |